# EUROPEAN PATENT SPECIFICATION

(11) **EP 2 232 084 B1**
(45) Date of publication and mention of the grant of the patent: **25.06.2014**
(21) Application number: 09700954.2
(22) Date of filing: 06.01.2009
(51) Int. Cl.: B01D 15/10, B01D 15/20, B01D 15/22, G01D 5/22, G01D 5/34

(54) **PISTON POSITION DETECTION FOR PREPARATIVE CHROMATOGRAPHY COLUMN**
KOLBENPOSITIONSERKENNUNG FÜR EINE PRÄPARATIVE CHROMATOGRAPHISCHE SÄULE
DÉTECTION DE LA POSITION D'UN PISTON POUR COLONNE DE CHROMATOGRAPHIE PRÉPARATIVE

(30) Priority: 07.01.2008 US 19479 P; 24.07.2008 US 83261 P
(43) Date of publication of application: 29.09.2010
(73) Proprietor: Bio-Rad Laboratories, Inc., Hercules, CA 94547 (US)
(72) Inventor: SNYDER, Mark A., Oakland California 94610 (US); BAKER, Ken, Martinez California 94553 (US); MORAN, Christopher, Petaluma California 94952 (US)
(74) Representative: Von Kreisler Selting Werner - Partnerschaft von Patentanwälten und Rechtsanwälten mbB
(86) International application number: PCT/US2009/030224
(87) International publication number: WO 2009/089221

(56) References cited:
- WO-A2-00/54724
- DE-A1- 3 820 883
- US-A- 4 542 652
- US-A- 5 641 893
- US-A- 6 036 855
- US-A- 6 036 855
- US-A1- 2003 193 345
- US-A1- 2005 263 359
- US-A1- 2006 023 218
- US-A1- 2007 144 955
- US-A1- 2007 144 955

## Description

### BACKGROUND OF THE INVENTION

Preparative chromatography is a separation technique used to extract individual chemical species from mixtures of species. Preparative chromatography thus differs from analytical chromatography whose purpose is to detect the presence, concentration, or both of particular components in the mixture, or to determine the composition of the entire mixture. Preparative chromatography is commonly performed by passing a mobile phase, consisting of the source mixture dissolved in a liquid carrier, in an axial direction through a column packed with a solid resin as the stationary phase. The types of interaction between the mobile and stationary phases that result in the separation of the desired species from the source mixture can vary widely, and include such diverse methodologies as ion-exchange chromatography, affinity chromatography, and liquid-liquid or partition chromatography.

The depth of an axial preparative chromatography column must be limited to avoid an excessive pressure drop through the column, which would require a high mobile phase pump pressure, high power to drive the pump, or both. On the other hand, to produce the separated species at a rate that is commercially useful, a column of relatively large diameter compared to analytical columns is favored. The typical preparative column is thus at least several centimeters in diameter, and in some cases, columns with diameters of a meter or more are used. Columns of large diameters suffer certain drawbacks, however, notably a lack of effective flow distribution across the width of the column which results in a loss in separation or resolving power. Flow distributors are typically used at both ends of the column to overcome this problem. In some cases as well, particularly in columns that are arranged vertically with downward flow, the solid phase is packed in the column in a manner that eliminates or minimizes void spaces at the inlet side of the packing. This can be achieved by applying pressure to the packing, but the pressure can lead to fracture or pulverization of a portion of the packing material, particularly if the material is incompressible or fragile. The pressure can be controlled by use a sliding piston, also referred to as an adaptor, that is positioned above the resin and is lowered until it contacts the resin. The typical piston also contains flow distribution channels to help distribute the mobile phase across the column width. The lowering of the piston must be closely controlled, however, since excessive force can either compress the resin excessively, which will result in flow properties that are less than optimal, or, in the case of incompressible resins such as ceramic hydroxyapatite and controlled-pore glass, cause damage by fracturing the resin particles, resulting in poor liquid flow and degraded performance. Additionally, for those resins where packing is controlled by compressing the resin by a set percentage relative to the uncompressed state, the total amount of resin in the column prior to compression must be known.

### SUMMARY OF THE INVENTION

The present invention addresses the need for improved control of piston movement in a preparative chromatography column by incorporating one or more proximity detectors in the piston head and particularly in the surface of the piston head that faces the resin. Examples of proximity detectors are optical detectors such as fiber optics and electronic or electromagnetic detectors such as differential variable reluctance transformers (DVRTs). In the case of a fiber optic, an optical signal is transmitted through the fiber optic and out the end that is exposed in the piston head, and an optical signal reflected from the resin in the column is allowed to re-enter the fiber optic and travel back through the optic in the opposite direction. The intensity of the reflected optical signal returning through the fiber optic is monitored as a measure of the proximity of the exposed end and hence the piston head to the resin. When the proximity detector is a DVRT, the DVRT is either a contact or a non-contact DVRT, with non-contact DVRTs preferred. In either type of DVRT, sensing and reference coils are driven by a high-frequency sine-wave excitation, and a change in reluctance in the sensing coil, as measured by use of a sensitive demodulator, occurs as the DVRT approaches the resin. Regardless of whether a fiber optic or a DVRT is used, the emitted signal that indicates the proximity of the detector to the resin is fed to a controller in which the absolute intensity of the signal, the rate of change of the intensity, or both, or any other parameter of the optical or electronic signal that changes as the piston head approaches the resin, is compared to a set value or threshold. The controller then controls the movement of the piston accordingly, halting the movement once the threshold is reached.

### BRIEF DESCRIPTION OF THE DRAWINGS

FIG. **1** is a cross section of a screw with an embedded optical fiber for use in preparative chromatography columns of the present invention.
FIG. **2** is a cross section of a screw with an embedded DVRT for use in preparative chromatography columns of the present invention.
FIG. **3** is a diagram of a preparative chromatography column and system in accordance with the present invention.

### DETAILED DESCRIPTION OF THE INVENTION AND PREFERRED EMBODIMENTS

In embodiments of the invention utilizing fiber optics as the proximity detectors, conventional optical fibers that are readily available from commercial suppliers can be used. The size of each fiber can vary according to the needs and preferences of the user or manufacturer of the chromatography column. Convenient sizes in most cases will be within the range of from about 1 mm to about 3 mm in outer diameter. The benefits of this invention can be achieved with a single optical fiber, but two or more, such as two to twelve, and in many cases three or more, such as three to twelve, evenly distributed across the piston surface, can also be used for greater control. The use of multiple fiber optics can allow the controller to eliminate the effects of nonrepresentative or aberrational signals from individual fibers or to calculate an average of the reflected signals from different sites on the piston surface to be taken. In certain embodiments of the invention, the incident and reflected light will both be transmitted through the same optical fiber(s). In other embodiments, separate optical fibers will be used, one for incident light and another for reflected light. Alternatively, the optical fibers can be arranged in bundles that include both fibers transmitting incident light to the piston surface and fibers transmitting reflected light back to the detector and controller. A plurality of fiber bundles can be used, distributed across the piston surface. The terms "fiber optic means" and "optical fiber means" are used generically herein to denote individual fibers, fiber bundles, and two or more fibers or fiber bundles distributed across the piston surfaces.

The signal transmitted through the optical fibers is preferably a light signal, and can be generated at the input end of the fiber(s) by a conventional light source, such as a light emitting diode, a halogen lamp, or a laser. The reflected light can be received and detected by a conventional detector, such as for example a photodiode. Upon receipt of the reflected light, the photodiode emits an electrical signal whose voltage or current can be passed through an operational amplifier and fed to the controller. The controller can be a unit that is custom-made for the specific needs of the system, or a standard industrial control module such as those that are readily available from commercial suppliers. The controller can be programmed to compare the level of the electrical signal from the detector, i.e., either its voltage or its amperage, with a reference or baseline, and the difference compared to a threshold value. The reference or baseline can for example be taken when the piston is at its starting position.

In embodiments of the invention utilizing differential variable reluctance transformers (DVRTs) as the proximity detectors, conventional DVRTs that are available from commercial suppliers can be used. One such supplier is MicroStrain, Inc. of Burlington Vermont, USA. The structures of DVRTs and the fundamentals of their operation are known in the art. DVRTs are half-bridge LVDTs (linear variable differential transformers), and among the various types of DVRTs are free-sliding DVRTs, gauging DVRTs, and non-contact DVRTs. Free-sliding and gauging DVRTs contain movable rods that contact the resin, while non-contact DVRTs are appropriate for resins that have high electrical conductivity.

The optimal proximity of the piston head to the resin, *i.e*., the position at which the movement of the piston is halted, can also vary at the choice of the operator or the column manufacturer or with the particular solid phase used in the column. In most cases, it is contemplated that piston movement will be halted when the piston is within about 1 mm, and preferably about 0.5 mm of the resin. For a resin that is to be compressed by the piston after the resin is placed in the column, the proximity detector can be used to determine the resin volume prior to compression, and compression can then be applied to reach a desired compression factor.

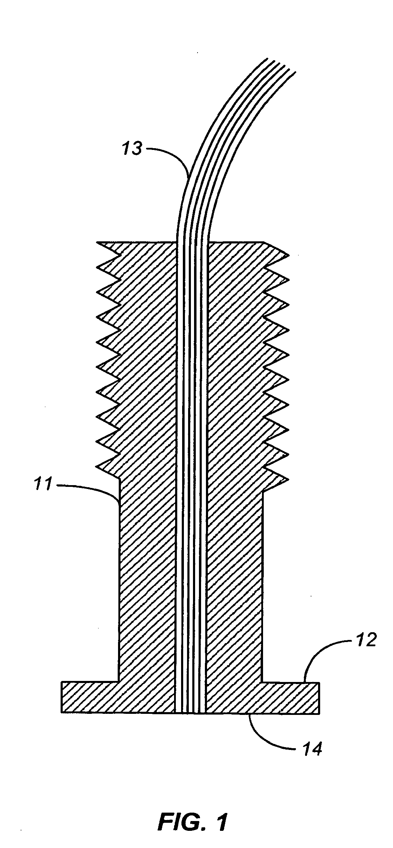

When an optical fiber proximity detector is used, the fiber can be mounted to the piston in any conventional manner and orientation that will allow light passing through the fiber to strike the surface of the resin and reflect back through the same or another fiber. The typical piston head has a flat surface facing the resin space, and certain pistons have a frit attached to the flat surface to serve as a flow distributor. In these cases, an optical fiber can be embedded in a bolt or screw of other fastening device by which the frit is secured to the piston. An example of a screw with an embedded optical fiber bundle is shown in FIG. **1**. The frit-retaining screw **11** is shown in this figure in the orientation that it will assume when joining the frit to the piston head, with the head **12** of the screw at the bottom. The optical fiber bundle **13** is shown, passing axially through the screw and terminating at the surface **14** of the screw head that will be approximately flush with the surface of the frit that faces the resin space (which is below the piston in the view shown in the Figure).

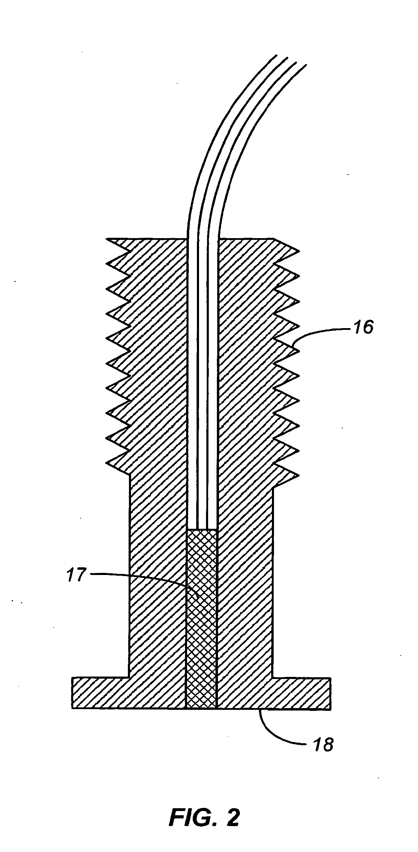

An example of a frit-retaining screw with an embedded DVRT is shown in FIG. **2****.** The screw **16** in this example is otherwise identical to the screw **11** of FIG. **1****,** and the DVRT **17** is exposed to the surface **18** of the screw head that will likewise be approximately flush with the surface of the frit.

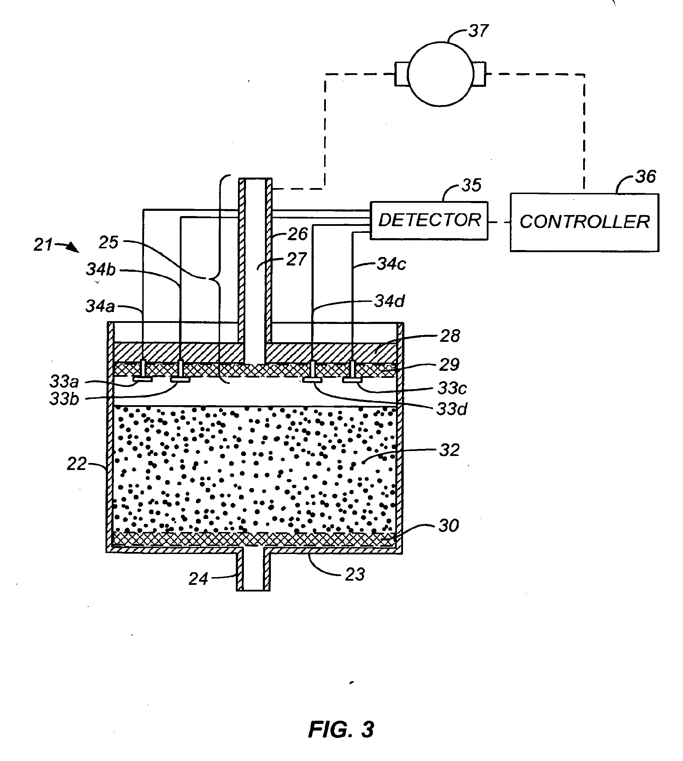

FIG. **3** depicts the entire chromatography column **21** including the cylindrical tube **22** and base **23** with fluid outlet tubing **24** at the base and a piston **25** at the upper end. The piston **25** includes a piston shaft **26,** which is hollow to accommodate an axial conduit **27** through which the liquid source mixture enters the column, and a piston head **28** which can be sealed against the inner walls of the cylindrical tube **22** (typically by an inflatable seal) but is capable of being moved vertically along the axis of the shaft **26.** Resin retention and flow distribution across the width of the column are achieved by an upper frit **29** secured to the underside of the piston head and a lower frit **30** resting on the cylinder floor, and the resin **32** resides between the two frits. A series of retaining screws **33a, 33b, 33c, 33d** secure the upper frit **29** to the piston head **28,** with proximity detectors **34a, 34b, 34c, 34d,** which can be either optical fibers or DVRTs, embedded in the screws. The proximity detectors **34a, 34b, 34c, 34d** are joined to a detector **35** containing sensor electronics. A controller **36** receives the signal emitted by the detector, and sends an instruction signal to a piston drive **37** which drives the piston. Any conventional motor capable of driving a piston at a slow rate can be used. One example is a stepper motor and another is a servomotor; still other examples will be readily apparent to those skilled in the art.

In the claims appended hereto, the term "a" or "an" is intended to mean "one or more." The term "comprise" and variations thereof such as "comprises" and "comprising," when preceding the recitation of a step or an element, are intended to mean that the addition of further steps or elements is optional and not excluded.

## Claims

1. A preparative chromatography column comprising
a cylindrical tube,
a piston head movably retained within said tube to define an upper extremity of a resin space in said tube,
drive means to move the piston head within said tube,
a proximity detector that is secured to said piston head and exposed to said resin space and that is adapted to emit a signal when said piston head is within a preselected distance of resin in said resin space, said proximity detector comprising an optical fiber for conveying light into said resin space and said signal is reflected light from said resin conveyed back through said optical fiber, and
a controller in signal communication with said proximity detector to receive said signal and to direct said drive means.

2. The preparative chromatography column of claim 1, wherein said proximity detector comprises a bundle of optical fibers for conveying light into said resin space and said signal is reflected light from said resin conveyed back through said bundle.

3. The preparative chromatography column of claim 1, wherein said piston head has a flat surface facing said resin space, and said preparative chromatography column comprises a plurality of said proximity detectors spaced apart along said flat surface, each said proximity detector being adapted to emit a signal when said proximity detector is within a preselected distance of resin in said resin space.

4. The preparative chromatography column of claim 1, wherein said preselected distance is about 1 mm.

5. The preparative chromatography column of claim 1, wherein said preselected distance is about 0.5 mm.

6. The preparative chromatography column of claim 1, wherein said piston head has a flat surface facing said resin space and a frit secured to said flat surface by a bolt, and said proximity detector is embedded in said bolt.

7. A method for lowering a piston head over a resin space in a preparative chromatography column to a position within a preselected distance of a resin retained in said resin space, said method comprising:
with a proximity detector secured to said piston head and exposed to said resin space, detecting a signal generated by said proximity detector that is indicative of the proximity of said piston head to said resin, wherein said proximity detector comprises optical fiber means and said method further comprises passing incident light through said optical fiber means into said resin space and detecting as said signal any reflected light from said resin entering said optical fiber means; and
converting said signal to an instruction to a drive means governing movement of said piston head to halt said movement when said piston head is within said preselected distance of said resin.

8. The method of claim 7, wherein said piston head has a flat surface facing said resin space and a plurality of said proximity detectors spaced apart along said flat surface, and said method comprises converting signals from all of said proximity detectors collectively to said instruction.

## Patentansprüche

1. Präparative Chromatographiesäule, umfassend:
ein zylindrisches Rohr;
einen Kolbenboden, der beweglich innerhalb des Rohrs festgehalten wird, um ein oberes Ende eines Harzraums in dem Rohr zu definieren;
eine Antriebseinrichtung, um den Kolbenboden innerhalb des Rohrs zu bewegen;
einen Annäherungssensor, der an dem Kolbenboden befestigt ist und zum Harzraum hin exponiert ist und der geeignet ist, ein Signal auszusenden, wenn sich der Kolbenboden innerhalb eines vorgewählten Abstands von Harz in dem Harzraum befindet, wobei der Annäherungssensor eine Lichtleitfaser umfasst, um Licht in den Harzraum hinein zu transportieren, und es sich bei dem Signal um reflektiertes Licht aus dem Harz handelt, das durch die Lichtleitfaser zurück transportiert wird; und
einen Kontroller in Signalverbindung mit dem Annäherungssensor, um das Signal zu empfangen und die Antriebseinrichtung zu steuern.

2. Präparative Chromatographiesäule gemäß Anspruch 1, wobei der Annäherungssensor ein Bündel von Lichtleitfasern umfasst, um Licht in den Harzraum hinein zu transportieren, und es sich bei dem Signal um reflektiertes Licht aus dem Harz handelt, das durch das Bündel zurück transportiert wird.

3. Präparative Chromatographiesäule gemäß Anspruch 1, wobei der Kolbenboden eine flache Fläche aufweist, die dem Harzraum zugewandt ist, und die präparative Chromatographiesäule eine Vielzahl der Annäherungssensoren umfasst, die entlang der flachen Fläche voneinander beabstandet sind, wobei jeder Annäherungssensor geeignet ist, ein Signal auszusenden, wenn sich der Annäherungssensor innerhalb eines vorgewählten Abstands von Harz in dem Harzraum befindet.

4. Präparative Chromatographiesäule gemäß Anspruch 1, wobei der vorgewählte Abstand etwa 1 mm beträgt.

5. Präparative Chromatographiesäule gemäß Anspruch 1, wobei der vorgewählte Abstand etwa 0,5 mm beträgt.

6. Präparative Chromatographiesäule gemäß Anspruch 1, wobei der Kolbenboden eine flache Fläche, die dem Harzraum zugewandt ist, und eine Fritte, die durch einen Bolzen an der flachen Fläche befestigt ist, aufweist und der Annäherungssensor in den Bolzen eingebettet ist.

7. Verfahren zum Absenken eines Kolbenbodens über einem Harzraum in einer präparativen Chromatographiesäule auf eine Position innerhalb eines vorgewählten Abstands von einem Harz, der in dem Harzraum enthalten ist, wobei das Verfahren umfasst:
mit einem Annäherungssensor, der an dem Kolbenboden befestigt ist und zum Harzraum hin exponiert ist, Nachweisen eines Signals, das von dem Annäherungssensor erzeugt wurde und das die Nähe des Kolbenbodens zu dem Harz anzeigt, wobei der Annäherungssensor eine Lichtleitfaser-Einrichtung umfasst und das Verfahren weiterhin das Leiten von eintreffendem Licht durch die Lichtleitfaser-Einrichtung in den Harzraum und das Nachweisen von gegebenenfalls von dem Harz reflektiertem Licht, das in die Lichtleitfaser-Einrichtung eintritt, als Signal umfasst; und
Umwandeln des Signals in eine Anweisung an eine Antriebseinrichtung, die die Bewegung des Kolbenbodens so steuert, dass die Bewegung anhält, wenn sich der Kolbenboden innerhalb des vorgewählten Abstands von dem Harz befindet.

8. Verfahren gemäß Anspruch 7, wobei der Kolbenboden eine flache Fläche, die dem Harzraum zugewandt ist, und eine Vielzahl der Annäherungssensoren, die entlang der flachen Fläche voneinander beabstandet sind, aufweist und das Verfahren das kollektive Umwandeln von Signalen von allen Annäherungssensoren in die Anweisung umfasst.

## Revendications

1. Colonne de chromatographie préparative, comprenant un tube cylindrique,
une tête de piston retenue de façon à pouvoir se déplacer au sein dudit tube pour définir une extrémité supérieure d'un espace de résine dans ledit tube, des moyens d'entraînement permettant de déplacer la tête de piston au sein dudit tube,
un détecteur de proximité qui est fixé à ladite tête de piston et exposé audit espace de résine, et qui est adapté pour émettre un signal lorsque ladite tête de piston se trouve au sein d'une distance à la résine présélectionnée dans ledit espace de résine, ledit détecteur de proximité comprenant une fibre optique destinée à acheminer la lumière dans ledit espace de résine, et ledit signal étant une lumière réfléchie depuis ladite résine et acheminée en retour par ladite fibre optique, et
un contrôleur, en communication par signal avec ledit détecteur de proximité pour recevoir ledit signal et commander ledit moyen d'entraînement.

2. Colonne de chromatographie préparative de la revendication 1, dans laquelle ledit détecteur de proximité comprend un faisceau de fibres optiques destinées à acheminer la lumière dans ledit espace de résine, et dans laquelle ledit signal est de la lumière réfléchie depuis ladite résine et acheminée en retour par ledit faisceau de fibres.

3. Colonne de chromatographie préparative de la revendication 1, dans laquelle ladite tête de piston présente une surface plane faisant face audit espace de résine, et ladite colonne de chromatographie préparative comprend une pluralité desdits détecteurs de proximité espacés le long de ladite surface plane, chacun desdits détecteurs de proximité étant adapté pour émettre un signal lorsque ledit détecteur de proximité se trouve au sein d'une distance à la résine présélectionnée dans ledit espace de résine.

4. Colonne de chromatographie préparative de la revendication 1, dans laquelle ladite distance présélectionnée est d'environ 1 mm.

5. Colonne de chromatographie préparative de la revendication 1, dans laquelle ladite distance présélectionnée est d'environ 0,5 mm.

6. Colonne de chromatographie préparative de la revendication 1, dans laquelle ladite tête de piston présente une surface plane faisant face audit espace de résine et un disque fritté fixé à ladite surface plane par un boulon, et ledit détecteur de proximité étant intégré dans ledit boulon.

7. Procédé d'abaissement d'une tête de piston sur un espace de résine dans une colonne de chromatographie préparative dans une position au sein d'une distance présélectionnée à une résine retenue dans un espace de résine, ledit procédé comprenant :
avec un détecteur de proximité fixé à ladite tête de piston et exposé audit espace de résine, détecter un signal généré par ledit détecteur de proximité et qui est indicateur de la proximité de ladite tête de piston par rapport à ladite résine, où ledit détecteur de proximité comprend des moyens en fibre optique et où ledit procédé comprend en outre l'étape consistant à faire passer de la lumière incidente par les moyens à fibre optique dans ledit espace de résine et à détecter en tant que dit signal toute lumière réfléchie depuis ladite résine et entrant dans lesdits moyens à fibre optique ; et
convertir ledit signal en une instruction visant à commander des moyens dirigeant le déplacement de ladite tête de piston pour arrêter ledit déplacement lorsque ladite tête de piston se trouve au sein de ladite distance présélectionnée à ladite résine.

8. Procédé selon la revendication 7, dans lequel ladite tête de piston présente une surface plane faisant face audit espace de résine et plusieurs desdits détecteurs de proximité espacés le long de ladite surface plane, et ledit procédé comprenant la conversion collectivement en une dite instruction des signaux émis par tous lesdits détecteurs de proximité.
